# EUROPÄISCHE PATENTSCHRIFT

(11) **EP 2 942 858 B1**
(45) Veröffentlichungstag und Bekanntmachung des Hinweises auf die Patenterteilung: **26.12.2018**
(21) Anmeldenummer: 15152050.9
(22) Anmeldetag: 22.01.2015
(51) Int. Cl.: H02K 1/27

(54) **Rotorblechpaket**
Laminated rotor core
Paquet de tôles de rotor

(30) Priorität: 05.05.2014 DE 102014208344
(43) Veröffentlichungstag der Anmeldung: 11.11.2015
(73) Patentinhaber: Siemens Aktiengesellschaft, 80333 München (DE)
(72) Erfinder: Hauck, Patrick, 67141 Neuhofen (DE); Huth, Gerhard, 97618 Hohenroth-Leutershausen (DE); Rettinger, Frank, 67586 Hillesheim (DE)

(56) Entgegenhaltungen:
- EP-A2- 1 643 617
- DE-A1-102009 001 035
- US-A- 5 786 650

## Beschreibung

Die Erfindung betrifft ein Rotorblechpaket für einen Rotor einer elektromagnetischen Maschine, welches durch eine Mehrzahl von in axialer Richtung geschichteten Blechen gebildet wird.

Der Einsatz von permanenterregten Synchronmaschinen (P-SyM) im Anwendungsbereich drehzahlveränderbarer Antriebe ist heutzutage als ein industrieller Standard etabliert. Der Erfolg der P-SyM ist eng an die Entwicklung der Seltenerd-Magnete geknüpft, die im Vergleich zu anderen Magneten aufgrund der hohen Koerzitivfeldstärke und Remanenzflussdichte eine hohe magnetische Energiedichte aufweisen. Dies ermöglicht die Konstruktion von kompakten Synchronmaschinen mit einem vergleichsweise hohen Drehmoment.

In hohen Stückzahlen werden P-SyM als Motoren bei Stell- und Positionierantrieben, beispielsweise bei Werkzeugmaschinen oder Industrierobotern, in Form von Servomotoren eingesetzt. Bei einem mit Wechselstrom betriebenen Servomotor werden die Seltenerde-Magnete in Rotor häufig direkt am Luftspalt angeordnet.

Zunehmend kommen P-SyM auch bei Hauptantrieben zum Einsatz, beispielsweise als Hauptspindel einer Werkzeugmaschine oder bei hochwertigen Präzisionsantrieben im so genannten Allgemeinen Maschinenbau, weswegen ihrer Entwicklung eine immer größere Bedeutung zukommt.

Wegen der unklaren Verfügbarkeit der Seltenerd-Elemente und der hohen Kosten für diese gerät dabei zunehmend die Entwicklung von alternativen Ausgestaltungen in den Vordergrund, welche ohne Seltenerd-Magnete auskommen. Eine Möglichkeit ist hierbei der Einsatz von Ferrit-Magneten, für die anders als bei Seltenerde-Magneten keinerlei Probleme der Verfügbarkeit bestehen. Wegen der im Vergleich schlechteren magnetischen Eigenschaften - insbesondere der deutlich geringeren magnetischen Energiedichte - werden die Ferrit-Magnete bevorzugt derart in ein Rotorblechpaket eines Rotors integriert, dass dieses teilweise magnetisiert wird und so die Flussverkettung des Rotors mit der Statorwicklung durch die Ausnutzung des Flusskonzentrationseffekts im Vergleich zu Luftspaltmagneten verbessert wird.

Eine hierzu häufig verwendete Ausgestaltung ist die speichenförmige Anordnung von Ferrit-Stabmagneten in dazu vorgesehenen Taschen in einem kreisringförmigen Rotorblechpaket, wobei je zwei in Umlaufrichtung benachbarte Magnete jeweils mit demselben Pol zueinander hin magnetisiert sind. Hierdurch wird zwischen den benachbarten Magneten durch die Magnetisierung der einzelnen Bleche des Rotorblechpaketes ein Rotorpol der entsprechenden Polarität ausgebildet.

In der Druckschrift DE 10 2009 001 035 A1 sind derartige Rotoranordnungen mit mehreren Blechlagen für einen Elektromotor bereits beschrieben. Auch aus der EP 10643 617 A2 ist ein Rotorkörper mit einem Rotorblech und einer entlang der Längskante befestigten Reihe von Vorsprüngen bekannt.

Dadurch, dass die Tasche für einen Magneten vom Rotorblechpaket hierbei im Wesentlichen vollständig umschlossen ist, kann jedoch über das Rotorblechpaket der Fluss jedes einzelnen Magneten teilweise kurzgeschlossen werden, selbst wenn die radiale Ausdehnung der Magnete sich fast über die ganze Ringbreite des Rotorblechpaketes erstreckt.

Eine Möglichkeit, diesen Kurzschluss zu unterdrücken, ist es, im Rotor die Stabmagnete um eine amagnetische Welle herum anzuordnen, welche durch magnetisch permeable Kreisringsektoren derselben Ringbreite voneinander getrennt sind, und die Anordnung aus Stabmagneten und Kreisringsektoren radial außen durch eine dünne Hülse zusammenzuhalten. Durch eine Fertigung des Rotors aus einzelnen Kreisringsektoren steigt jedoch der Produktions aufwand.

Der Erfindung liegt daher die Aufgabe zugrunde, für einen Rotor einer elektromagnetischen Maschine eine besonders einfache und kostengünstige Konstruktion zu ermöglichen.

Die Aufgabe wird erfindungsgemäß gelöst durch ein Rotorblechpaket für einen Rotor einer elektromagnetischen Maschine, gemäß den Merkmalen des Patentanspruchs 1.

Die Aufgabe wird weiterhin gelöst durch einen Rotor gemäß den Merkmalen des Patentanspruchs 6 und durch eine Elektromagnetische Maschine gemäß den Merkmalen des Patentanspruchs 7.

Die axiale Richtung der Schichtung wird hierbei durch die Richtung im Rotor definiert, welche im Betrieb der elektromagnetischen Maschine durch seine Rotationsachse gegeben ist. Unter einem im Wesentlichen in Umlaufrichtung verlaufenden Steg ist hierbei ein solcher Steg zu verstehen, welcher in radialer Richtung eine Ausdehnung aufweist, die im Vergleich zur radialen Ausdehnung der angrenzenden Aussparung wesentlich geringer ist, oder dessen radiale Breite im Vergleich zu seiner Länge in Umfangsrichtung vernachlässigbar ist.

Der Erfindung liegen hierbei folgende Überlegungen zugrunde: Wird die elektromagnetische Maschine als ein Motor betrieben, so treten an einem dem Rotor zugewandten Stator im Betrieb zeitlich veränderliche Magnetfelder auf. Im Rotor können durch die veränderlichen Magnetfelder Wirbelströme induziert werden, welche zu Leistungsverlusten und überdies zu einer ungewünschten Erwärmung des Rotors führen können. Um diese Wirbelströme möglichst gering zu halten, ist bei einem Rotordesign, in welchem Permanentmagnete in einem Rotorrahmen gehalten werden und diesen teilweise magnetisieren sollen, der Rotorrahmen bevorzugt als ein Rotorblechpaket aus geschichteten Blechen zu fertigen. Insbesondere sind die einzelnen Bleche hierbei voneinander jeweils elektrisch isoliert.

Um in einem derartigen Rotor die magnetische Energie der Permanentmagnete zur Magnetisierung des Rotorrahmens bestmöglich ausnutzen zu können, ist der Kurzschluss des Feldes jedes einzelnen Permanentmagneten über den Rotorrahmen selbst, in welchen der Permanentmagnet eingebracht ist, so weit wie möglich zu unterdrücken, während bei einer gegebenen Dicke des Rotors die magnetisierbare Fläche des Rotorrahmens möglichst groß sein sollte. Dies könnte durch ein Rotordesign erreicht werden, in welchem die einzelnen Permanentmagnete jeweils durch getrennte Flächenstücke des Rotorrahmens voneinander beabstandet sind. Da der Rotorrahmen jedoch als ein Rotorblechpaket zu bilden ist, würde dieses Vorgehen zu einer Vielzahl an voneinander getrennten Einzelflächenstücken führen, welche im Fertigungsprozess korrekt zueinander zu positionieren wären, was aufwändig und daher kostenintensiv wäre.

Eine für die Erfindung zentrale Erkenntnis ist es nun, eine Mehrzahl von Blechen im Wesentlichen als durch Aussparungen voneinander beabstandete Einzelflächenstücke auszugestalten, welche jedoch an jeder Aussparung jeweils einendseitig mit dem benachbarten Einzelflächenstück über einen Steg verbunden sind. Dies erlaubt eine einstückige Fertigung des jeweiligen Bleches und eine einfache Schichtung der betreffenden Bleche ohne aufwendige Fixierung, was zu einem kostengünstigen Produktionsprozess beiträgt. Überdies eröffnet eine solche Gestaltung die Möglichkeit, die Stege an den jeweiligen Einzelflächenstücken verschiedener Bleche derart anzubringen, dass in einer Schichtung der Bleche die übereinander liegenden Aussparungen jeweils eine Tasche für einen Permanentmagneten bilden können, welche an beiden radialen Enden jeweils von mindestens einem Steg begrenzt wird, wobei die Stege unterschiedlichen Blechen zugehörig sind.

Günstigerweise wird hierbei jedes Blech im Wesentlichen durch in Umlaufrichtung angeordnete Einzelflächenstücke gebildet, welche jeweils durch die Aussparungen voneinander beabstandet sind, wobei an jeder Aussparung radial einendseitig die jeweiligen angrenzenden Einzelflächenstücke über einen im Wesentlichen in Umlaufrichtung verlaufenden Steg verbunden sind. Dadurch, dass jedes Blech die beschriebene Form aufweist, gestaltet sich die Fertigung besonders einfach. Es kann hierdurch im Rotorblechpaket auf Blechebenen mit losen Einzelflächenstücken verzichtet werden, die nur über Bleche anderer Schichtebenen miteinander verbunden wären und aufgrund der nötigen Fixierung in der Fertigung aufwändiger wären. Dennoch wird in einem fertigen Rotor der magnetische Kurzschluss eines jeden Permanentmagneten möglichst gering gehalten, da die jeweils angrenzenden Einzelflächenstücke in jeder Blechebene nur einendseitig durch einen Steg miteinander verbunden sind.

Bevorzugt weisen in allen Blechen die Einzelflächenstücke jeweils die gleiche Anordnung und Flächenform auf. Dies bedeutet, dass es möglich ist, die Bleche derart übereinander zu legen, dass diese bis auf die jeweiligen Stege deckungsgleiche Aussparungen aufweisen, und sich die Bleche somit ggf. nur in den Stegen selbst und/oder Bohrungen für Schrauben bzw. Bolzen und/oder ähnlichen Montagevorrichtungen im Inneren von Einzelflächenstücken unterscheiden. Bei geeignetem Schichten können infolge der gleichen Flächenform in allen Blechen durch die jeweils übereinander liegenden Aussparungen in den Blechen Taschen mit zu den Blechen senkrechten Wandungen gebildet werden. Dies ermöglicht ein besonders einfaches Einbringen von Permanentmagneten in den Rotor. Insbesondere können hierbei verschiedene Bleche eine unterschiedliche Dicke und/oder Dichte aufweisen.

Insbesondere können alle Bleche die gleiche Flächenform aufweisen und somit bis auf Bohrungen in den Einzelflächenstücken deckungsgleich sein, was insbesondere bedeutet, dass auch die Anordnung der Stege bezüglich der Einzelflächenstücke bei allen Blechen gleich sein kann. Dies vermag den Fertigungsprozess weiter zu vereinfachen.

Erfindungsgemäß sind in einer ersten Untermenge der Mehrzahl von Blechen alle Stege zur Verbindung je zweier Einzelflächenstücke jeweils am radial äußeren Ende der entsprechenden Aussparung angeordnet. Insbesondere können in diesem Fall durch die Aussparungen der Bleche jeweils Taschen gebildet werden, welche radial einendseitig von außen begrenzt sind. In einem fertigen Rotor können die in die Taschen eingebrachten Permanentmagnete radial innenseitig auf einer Welle des Rotors aufsitzen. Hierfür ist bevorzugt die Welle zumindest im Bereich des Rotorblechpakets und der Permanentmagnete aus einem amagnetischen Material zu fertigen. Eine derartige Konzeption des Rotorblechpaketes ist aufgrund ihrer geometrischen Einfachheit besonders kostengünstig in der Fertigung.

Außerdem sind erfindungsgemäß in einer zweiten Untermenge der Mehrzahl von Blechen alle Stege zur Verbindung je zweier Einzelflächenstücke jeweils am radial inneren Ende der entsprechenden Aussparung angeordnet. Insbesondere kann dabei die zweite Untermenge auch alle Bleche des Rotorblechpaketes umfassen. Insbesondere können in diesem Fall durch die Aussparungen der Bleche jeweils Taschen gebildet werden, welche radial einendseitig von innen begrenzt sind. Insbesondere können einem fertigen Rotor die in die Taschen eingebrachten Permanentmagnete radial außenseitig durch eine Hülse oder ein Band geringer radialer und ggf. geringer axialer Ausdehnung gehalten werden. Eine derartige Konzeption des Rotorblechpaketes ist aufgrund ihrer geometrischen Einfachheit besonders kostengünstig in der Fertigung. Bevorzugt ist dabei die Welle des Rotors zumindest im Bereich des Rotorblechpakets und der Permanentmagnete aus einem amagnetischen Material zu fertigen, um einen Streufluss bzw. einen Kurzschluss des Feldes eines Permanentmagneten über die inneren Stege und die Welle zu unterdrücken.

Günstigerweise weist hierbei in den Blechen der zweiten Untermenge jedes Einzelflächenstück am radial äußeren Ende zwei Haltenasen auf, welche jeweils eine angrenzende Aussparung überstehen. Die durch die Aussparungen der übereinanderliegenden Bleche gebildeten Taschen, in welche im fertigen Rotor die Permanentmagnete eingebracht sind, werden durch die Haltenasen radial außenseitig begrenzt, wodurch auf eine zusätzliche Begrenzung, etwa durch eine Hülse oder ein Band geringer radialer und ggf. geringer axialer Ausdehnung, verzichtet werden kann. Dies vereinfacht den Produktionsprozess und verringert überdies den Materialaufwand.

Als vorteilhaft erweist es sich, wenn jedes Blech drehsymmetrisch ist. Aufgrund der damit einhergehenden drehsymmetrischen Massenverteilung des Rotorblechpaketes erlaubt dies - bei einem Einsatz geeigneter Permanentmagnete im Rotor - im motorischen Betrieb des Rotors die Erzeugung eines möglichst homogenen Drehmomentes. Überdies ist eine derartige Konzeption des Rotorblechpaketes aufgrund ihrer geometrischen Einfachheit besonders kostengünstig in der Fertigung.

Zweckmäßigerweise sind dabei in einer dritten Untermenge der Mehrzahl von Blechen je zwei am selben Einzelflächenstück anschließende Stege an jeweils radial unterschiedlichen Enden der entsprechenden Aussparungen angeordnet. Mit anderen Worten heißt dies, dass sich also je zwei Stege, welche in Umlaufrichtung benachbart und über ein Einzelflächenstück miteinander verbunden sind, radial an verschiedenen Enden des Einzelflächenstückes anschließen, und somit die Stege in Umlaufrichtung abwechselnd radial innen bzw. außen an der jeweiligen Aussparung angeordnet sind. Insbesondere kann dabei die dritte Untermenge auch alle Bleche des Rotorblechpaketes umfassen. Dies ermöglicht bei einer geeigneten Schichtung durch die Aussparungen übereinanderliegender Bleche im Rotorblechpaket die Ausbildung von Taschen, welche jeweils radial innen- und außenseitig allein durch Stege verschiedener Bleche begrenzt werden.

Vorteilhafterweise sind hierbei die Bleche der dritten Untermenge derart verdreht gegeneinander geschichtet, dass jede durch einzelne Aussparungen verschiedener Bleche gebildete Tasche durch die Stege verschiedener Bleche der dritten Untermenge sowohl am radial inneren Ende als auch am radial äußeren Ende begrenzt wird. Insbesondere ist hierbei jede Tasche durch dieses in axialer Draufsicht vom Rotorblechpaket vollständig umschlossen, und dementsprechend haben die im fertigen Rotor in die Taschen eingebrachten Permanentmagnete keinen direkten Kontakt mit der Welle des Rotors. Bevorzugt ist dabei die Welle des Rotors zumindest im Bereich des Rotorblechpakets und der Permanentmagnete aus einem amagnetischen Material zu fertigen, um einen Streufluss bzw. einen Kurzschluss des Feldes eines Permanentmagneten über die inneren Stege und die Welle zu unterdrücken.

Insbesondere kann das Rotorblechpaket auch aus einer Kombination von Blechen der ersten Untermenge und/oder der zweiten Untermenge und/oder der dritten Untermenge gefertigt sein.

Bevorzugt weisen die Einzelfächenstücke eines jeden Bleches im Wesentlichen eine Kreissektorform oder eine Kreisringsektorform auf. In der Schichtung können so im Rotorblechpaket Taschen mit im Wesentlichen (bis auf die Bereiche der Stege) trapez- bzw. rechteckförmigem Querschnitt ausgebildet werden, und im Rotor entsprechend geformte Permanentmagnete eingebracht werden können. Da die Permanentmagnete zur besseren Magnetisierung des Rotorblechpaketes vorzugsweise eine möglichst große Kontaktfläche mit selbigem aufweisen sollten, und dementsprechend die Taschen die Permanentmagnete bevorzugt möglichst dicht umschließen, vereinfacht die genannte geometrische Ausgestaltung den Produktionsprozess.

Die gestellte Aufgabe wird erfindungsgemäß auch gelöst durch einen Rotor für eine elektromagnetische Maschine, der das vorbeschriebene Rotorblechpaket, eine drehfest mit dem Rotorblechpaket verbundene Welle und eine Mehrzahl an Permanentmagneten umfasst, die jeweils in durch die Aussparungen gebildete Taschen eingebracht sind, wobei je zwei in Umlaufrichtung benachbarte Permanentmagnete mit jeweils gleichem Pol zueinander hin magnetisiert sind, und wobei die Welle zumindest im Kontaktbereich mit dem Rotorblechpaket und/oder den Permanentmagneten aus einem amagnetischen Material gefertigt ist.

Zwischen je zwei Permanentmagneten werden dabei durch die Magnetisierung zueinander im entsprechenden Bereich des Rotorblechpaketes magnetische Pole ausgebildet, welche den magnetischen Fluss zum Mantel des Rotorblechpaketes hin ausrichten. Hierdurch wird eine besonders gute Flussverkettung zwischen dem Rotor und der Wicklung eines an der elektromagnetischen Maschine angeordneten Stators erreicht. Die Ausgestaltung des Rotorblechpaketes unterbindet zudem weitestmöglich einen Kurzschluss des Feldes eines jeden Permanentmagneten über das Rotorblechpaket selbst. Dadurch, dass die Welle zumindest im Kontaktbereich mit dem Rotorblechpaket und, falls die Welle mit diesen direkten Kontakt hat, den Permanentmagneten aus einem amagnetischen Material gefertigt ist, wird auch der Kurzschluss über die Welle unterdrückt.

Die gestellte Aufgabe wird des Weiteren erfindungsgemäß auch gelöst durch eine elektromagnetische Maschine mit einem Stator und einem vorbeschriebenen Rotor. Die für das Rotorblechpaket und seine Weiterbildungen sowie den Rotor genannten Vorteile können dabei sinngemäß auf die elektromagnetische Maschine übertragen werden.

Nachfolgend wird ein Ausführungsbeispiel der Erfindung anhand einer Zeichnung näher erläutert. Hierbei zeigen jeweils schematisch:
- FIG 1: in einer Schrägansicht einen Rotor einer elektromagnetischen Maschine,
- FIG 2: in einer Draufsicht ein Blech eines Rotorblechpaketes nach FIG 1 mit abwechselnd außenseitig und innenseitig verbundenen Einzelflächenstücken,
- FIG 3: in einer Draufsicht ein Blech eines Rotorblechpaketes mit innenseitig verbundenen Einzelflächenstücken, und
- FIG 4: in einer Draufsicht ein Blech eines Rotorblechpaketes mit außenseitig verbundenen Einzelflächenstücken.

Einander entsprechende Teile und Größen sind in allen Figuren jeweils mit gleichen Bezugszeichen versehen.

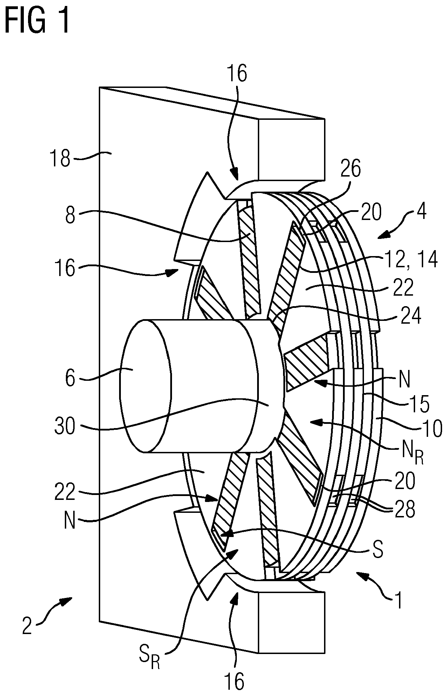

In FIG 1 ist in einer Schrägansicht ein Rotor 1 einer elektromagnetischen Maschine 2 gezeigt. Der Rotor 1 umfasst dabei ein Rotorblechpaket 4, eine Welle 6, welche drehfest mit dem Rotorblechpaket 4 verbunden ist, und Permanentmagnete 8. Das Rotorblechpaket 4 wird dabei gebildet durch in axialer Richtung geschichtete Bleche 10. Die Permanentmagnete 8 sind in Taschen 12 im Rotorblechpaket 4 eingebracht. Die Taschen 12 werden dabei gebildet durch einzelne Aussparungen 14 der Bleche 10, die in diese in Umlaufrichtung angeordnet sind. Je zwei in Umlaufrichtung benachbarte Permanentmagnete 8 sind jeweils mit dem gleichen Pol N, S zueinander hin magnetisiert, wodurch sich im Rotorblechpaket 4 zwischen je zwei Permanentmagneten 8 ein so genannter Rotorpol N_{R}, S_{R} ausbildet. Der magnetische Fluss der Rotorpole N_{R}, S_{R} ist dabei in Richtung des Mantels 15 des Rotors 1 gerichtet. Hierdurch wird im Betrieb der elektromagnetischen Maschine 2 eine hohe Flussverkettung mit den hier nur schematisch angedeuteten Polen 16 des Stators 18 erreicht.

Um den Kurzschluss der Pole N, S eines Permanentmagneten 8 über die Bleche 10 des Rotorblechpaketes 4 zu unterdrücken, weist jedes Blech 10 im Bereich jeder Aussparung 14 nur einen dünnen Steg 20 zur Verbindung je zweier Einzelflächenstücke 22 auf, wobei die Bleche jeweils durch die Gesamtheit ihrer Einzelflächenstücke 22 und Stege 20 gebildet werden. In dieser Darstellung sind die Stege 20 zur Verbindung der Einzelflächenstücke 22 eines jeden Bleches 10 abwechselnd an der radial inneren Seite 24 und der radial äußeren Seite 26 angeordnet. Hierdurch bilden sich im Bereich der Permanentmagnete 8 in den Blechen 10, in denen ein Steg 20 radial innenseitig angeordnet ist, im Mantel 15 Luftspalte 28, welche aufgrund der im Vergleich zu den Stegen 20 erheblich niedrigeren Permeabilität den magnetischen Kurzschluss der Permanentmagnete 8 erschweren. Überdies ist im Kontaktbereich 30 der Welle 6 mit dem Rotorblechpaket 4 die Welle 6 aus einem amagnetischen Material gefertigt, was den magnetischen Kurzschluss der Pole N, S eines Permanentmagneten 8 unterdrückt.

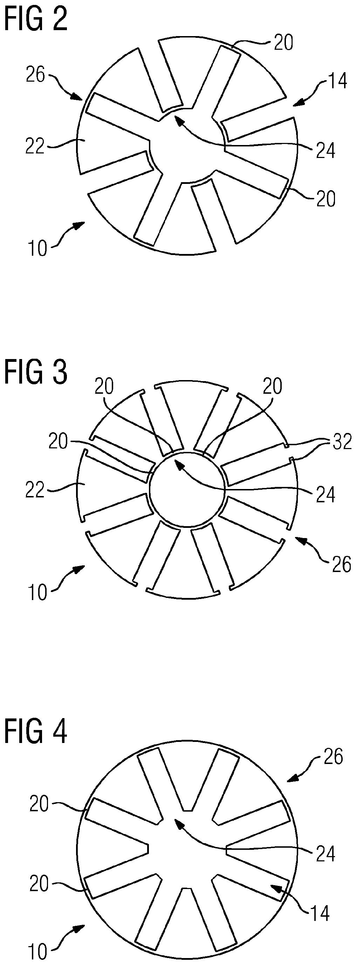

In FIG 2 ist in einer Draufsicht ein Blech 10 des Rotorblechpaketes nach FIG 1 dargestellt. Die Stege 20 verbinden hierbei die Einzelflächenstücke 22 jeweils abwechselnd an der radial inneren Seite 24 und der radial äußeren Seite 26, so dass die jeweilige Aussparung 14 radial nur einendseitig begrenzt ist. Zur Bildung des Rotorblechpaketes werden mehrere Bleche 10 jeweils gegeneinander um einen Winkel von 45° verdreht geschichtet, so dass die Taschen, welche durch die übereinanderliegenden Aussparungen 14 gebildet werden, in der Schichtung abwechselnd jeweils von einem Steg 20 an der radial inneren Seite 24 und einem Steg 20 an der radial äußeren Seite 26 begrenzt werden. Die sich hierbei in der Schichtung bildenden Luftspalte an den radial offenen Enden der Aussparungen 14 helfen, den Kurzschluss eines Permanentmagneten zu unterdrücken.

In FIG 3 ist in einer Draufsicht ein Blech 10 dargestellt, bei welchem alle Stege 20 zur Verbindung der Einzelflächenstücke 22 an der radial inneren Seite 24 angeordnet sind. Um in der Schichtung die Permanentmagnete in den durch die Aussparungen 14 gebildeten Taschen zu halten, sind an jedem Einzelflächenstück an der radial äußeren Seite 26 je zwei Haltenasen 32 angeordnet, die teilweise über die jeweils angrenzende Aussparung 14 überstehen. Dadurch, dass jedoch an der radial äußeren Seite 26 keine Verbindung zwischen den benachbarten Einzelflächenstücken 22 besteht, wird im fertigen Rotor der Kurzschluss des Feldes eines Permanentmagneten abgeschwächt.

In FIG 4 ist in einer Draufsicht ein Blech 10 dargestellt, bei welchem alle Stege 20 zur Verbindung der Einzelflächenstücke 22 an der radial äußeren Seite 26 angeordnet sind. Um in der Schichtung die Permanentmagnete in den durch die Aussparungen 14 gebildeten Taschen zu halten, werden die Permanentmagnete direkt auf der Welle aufgesetzt.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

### Bezugszeichenliste

- 1: Rotor
- 2: elektromagnetische Maschine
- 4: Rotorblechpaket
- 6: Welle
- 8: Permanentmagnet
- 10: Blech
- 12: Tasche
- 14: Aussparung
- 15: Mantel
- 16: Pol
- 18: Stator
- 20: Steg
- 22: Einzelflächenstück
- 24: radial innere Seite
- 26: radial äußere Seite
- 28: Luftspalt
- 30: Kontaktbereich
- 32: Haltenase
- N: Pol
- S: Pol
- N_{R}: Rotorpol
- S_{R}: Rotorpol

## Patentansprüche

1. Rotorblechpaket (4) für einen Rotor (1) einer elektromagnetischen Maschine (2), welches durch eine Mehrzahl von in axialer Richtung geschichteten Blechen (10) gebildet wird, bei dem
eine Mehrzahl an Blechen (10) jeweils im Wesentlichen durch in Umlaufrichtung angeordnete Einzelflächenstücke (22) gebildet wird, welche jeweils durch Aussparungen (14) voneinander beabstandet sind, wobei an jeder Aussparung (14) radial einendseitig die jeweiligen angrenzenden Einzelflächenstücke (22) über einen im Wesentlichen in Umlaufrichtung verlaufenden Steg (20) verbunden sind und
jedes Blech (10) drehsymmetrisch ist
**dadurch gekennzeichnet, dass**
in einer dritten Untermenge der Mehrzahl von Blechen (10) je zwei am selben Einzelflächenstück (22) anschlie-ßende Stege (20) an jeweils radial unterschiedlichen Enden (24, 26) der entsprechenden Aussparungen (26) angeordnet sind.

2. Rotorblechpaket (4) nach Anspruch 1,
**dadurch gekennzeichnet, dass**
jedes Blech (10) im Wesentlichen durch in Umlaufrichtung angeordnete Einzelflächenstücke (22) gebildet wird, welche jeweils durch die Aussparungen (14) voneinander beabstandet sind, wobei an jeder Aussparung (14) radial einendseitig die jeweiligen angrenzenden Einzelflächenstücke (22) über einen im Wesentlichen in Umlaufrichtung verlaufenden Steg (20) verbunden sind.

3. Rotorblechpaket (4) nach Anspruch 1 oder Anspruch 2,
**dadurch gekennzeichnet, dass**
in allen Blechen (10) die Einzelflächenstücke (22) jeweils die gleiche Anordnung und Flächenform aufweisen.

4. Rotorblechpaket (4) nach einem der vorhergehenden Ansprüche,
**dadurch gekennzeichnet, dass** die Bleche (10) der dritten Untermenge derart verdreht gegeneinander geschichtet sind, dass jede durch Aussparungen (14) verschiedener Bleche gebildete Tasche (12) durch die Stege (20) verschiedener Bleche (10) der dritten Untermenge sowohl am radial inneren Ende (24) als auch am radial äußeren Ende (26) begrenzt wird.

5. Rotorblechpaket (4) nach einem der vorhergehenden Ansprüche,
**dadurch gekennzeichnet, dass** die Einzelflächenstücke (22) eines jeden Bleches (10) im Wesentlichen eine Kreissektorform oder eine Kreisringsektorform aufweisen.

6. Rotor (1) für eine elektromagnetische Maschine (2), umfassend ein Rotorblechpaket (4) nach einem der vorhergehenden Ansprüche, eine drehfest mit dem Rotorblechpaket (4) verbundene Welle (6) und eine Mehrzahl an Permanentmagneten (8), welche jeweils in durch die Aussparungen (14) gebildete Taschen (12) eingebracht sind,
wobei je zwei in Umlaufrichtung benachbarte Permanentmagnete (8) mit jeweils gleichem Pol (N, S) zueinander hin magnetisiert sind, und
wobei die Welle (6) zumindest im Kontaktbereich (30) mit dem Rotorblechpaket (4) und/oder den Permanentmagneten (8) aus einem amagnetischen Material gefertigt ist.

7. Elektromagnetische Maschine (2) mit einem Stator (18) und einem Rotor (1) nach Anspruch 6.

## Claims

1. Laminated rotor core (4) for a rotor (1) of an electromagnetic machine (2), which laminated rotor core is formed by a plurality of laminates (10) which are layered in the axial direction, in which laminated rotor core
a plurality of laminates (10) is formed in each case substantially by individual flat pieces (22) which are arranged in the circumferential direction and are spaced apart from one another by cutouts (14) in each case, wherein, at each cutout (14), the respective adjoining individual flat pieces (22) are connected radially at one end side by means of a web (20) which runs substantially in the circumferential direction, and
each laminate (10) is rotationally symmetrical,
**characterized in that**,
in a third subset of the plurality of laminates (10), each two webs (20), which adjoin the same individual flat piece (22), are arranged at respectively radially different ends (24, 26) of the corresponding cutouts (26).

2. Laminated rotor core (4) according to Claim 1,
**characterized in that**
each laminate (10) is formed substantially by individual flat pieces (22) which are arranged in the circumferential direction and which are spaced apart from one another by the cutouts (14) in each case, wherein, at each cutout (14), the respective adjoining individual flat pieces (22) are connected radially at one end side by means of a web (20) which runs substantially in the circumferential direction.

3. Laminated rotor core (4) according to Claim 1 or Claim 2,
**characterized in that**
the individual flat pieces (22) each have the same arrangement and flat shape in all laminates (10).

4. Laminated rotor core (4) according to one of the preceding claims,
**characterized in that**
the laminates (10) of the third subset are layered in a rotated manner in relation to one another in such a way that each pocket (12) which is formed by cutouts (14) of different laminates is delimited by the webs (20) of different laminates (10) of the third subset both at the radially inner end (24) and also at the radially outer end (26).

5. Laminated rotor core (4) according to one of the preceding claims,
**characterized in that**
the individual flat pieces (22) of each laminate (10) are substantially in the shape of a sector of a circle or in the shape of a sector of a ring.

6. Rotor (1) for an electromagnetic machine (2), comprising a laminated rotor core (4) according to one of the preceding claims, a shaft (6) which is connected in a rotationally fixed manner to the laminated rotor core (4), and a plurality of permanent magnets (8) which are each inserted into pockets (12) which are formed by the cutouts (14),
wherein in each case two permanent magnets (8) which are adjacent in the circumferential direction are magnetized toward one another with respectively the same pole (N, S), and
wherein the shaft (6) is manufactured from an amagnetic material at least in the contact region (30) with the laminated rotor core (4) and/or the permanent magnets (8).

7. Electromagnetic machine (2) comprising a stator (18) and a rotor (1) according to Claim 6.

## Revendications

1. Paquet de tôles de rotor (4) pour un rotor (1) d'une machine électromagnétique (2), lequel est formé par une pluralité de tôles (10) stratifiées dans la direction axiale, dans lequel
une pluralité de tôles (10) est formée respectivement essentiellement par des éléments de surface individuels (22) disposés dans la direction circonférentielle, lesquels sont espacés les uns des autres respectivement par des cavités (14), dans lequel à chaque cavité (14) sont reliés radialement du côté d'une extrémité les éléments de surface individuels (22) adjacents respectifs par l'intermédiaire d'une entretoise (20) s'étendant essentiellement dans la direction circonférentielle et
chaque tôle (10) est symétrique par rotation
**caractérisé en ce que**
dans un troisième sous-ensemble de la pluralité de tôles (10), à chaque fois deux entretoises (20) raccordées au même élément de surface individuel (22) sont disposées respectivement sur des extrémités radialement différentes (24, 26) des cavités (26) correspondantes.

2. Paquet de tôles de rotor (4) selon la revendication 1,
**caractérisé en ce que**
chaque tôle (10) est formée essentiellement par des éléments de surface individuels (22) disposés dans la direction circonférentielle, lesquels sont espacés les uns des autres respectivement par les cavités (14), dans lequel à chaque cavité (14) sont reliés radialement du côté d'une extrémité les éléments de surface individuels (22) adjacents respectifs par l'intermédiaire d'une entretoise (20) s'étendant essentiellement dans la direction circonférentielle.

3. Paquet de tôles de rotor (4) selon la revendication 1 ou la revendication 2,
**caractérisé en ce que**
dans toutes les tôles (10), les éléments de surface individuels (22) comprennent respectivement les mêmes disposition et forme de surface.

4. Paquet de tôles de rotor (4) selon l'une des revendications précédentes,
**caractérisé en ce que** les tôles (10) du troisième sous-ensemble sont stratifiées les unes contre les autres en rotation de telle sorte que chaque poche (12) formée par des cavités (14) de différentes tôles soit limitée par les entretoises (20) de différentes tôles (10) du troisième sous-ensemble tant sur l'extrémité radialement interne (24) que sur l'extrémité radialement externe (26).

5. Paquet de tôles de rotor (4) selon l'une des revendications précédentes,
**caractérisé en ce que** les éléments de surface individuels (22) de chaque tôle (10) comprennent essentiellement une forme de secteur circulaire ou une forme de secteur annulaire.

6. Rotor (1) pour une machine électromagnétique (2), comportant un paquet de tôles de rotor (4) selon l'une des revendications précédentes, un arbre (6) relié solidairement en rotation au paquet de tôles de rotor (4) et une pluralité d'aimants permanents (8), lesquels sont introduits respectivement dans des poches (12) formées par les cavités (14),
dans lequel, à chaque fois deux aimants permanents (8) voisins dans la direction circonférentielle sont aimantés avec respectivement le même pôle (N, S) l'un par rapport à l'autre, et
dans lequel l'arbre (6) est préparé à partir d'un matériau amagnétique au moins dans la zone de contact (30) avec le paquet de tôles de rotor (4) et/ou les aimants permanents (8).

7. Machine électromagnétique (2) avec un stator (18) et un rotor (1) selon la revendication 6.
